# EUROPÄISCHE PATENTANMELDUNG

(11) **EP 1 155 811 A2**
(43) Veröffentlichungstag der Anmeldung: **21.11.2001**
(21) Anmeldenummer: 01101231.7
(22) Anmeldetag: 19.01.2001
(51) Int. Cl.: B30B 11/08

(54) **Rundläufer-Tablettenpresse für die Herstellung von mehrschichtigen Tabletten**

(30) Priorität: 17.05.2000 DE 10026731
(71) Anmelder: Wilhelm Fette GmbH, 21493 Schwarzenbek (DE)
(72) Erfinder: Arndt, Ulrich, 21481 Lauenburg (DE); Heinrich, Thomas, 21435 Stelle (DE); Hinzpeter, Jürgen, 21493 Schwarzenbek (DE); Jacob, Thomas, 21502 Geesthacht (DE); Lüneburg, Peter, 23919 Berkenthin (DE); Stellmach, Gert, 01259 Dresden (DE); Zeuschner, Ulrich, 21493 Schwarzenbek (DE)
(74) Vertreter: Patentanwälte Hauck, Graalfs, Wehnert, Döring, Siemons

(57) **Zusammenfassung**

Rundläufer-Tablettenpresse für die Herstellung von mehrschichtigen Tabletten, mit einem drehangetriebenen Rotor, der eine Matrizenscheibe mit Matrizenbohrungen und zu den Matrizenbohrungen ausgerichteten Ober- und Unterstempel aufweist, die in Stempelführungen des Rotors geführt und von stationären Steuerkurven axial betätigt werden, einer Einlegevorrichtung für einen Abschnitt der tablettenbildenden Preßlinge, die radial beweglich geführte Arme aufweist, an deren Enden jeweils ein Preßling gehalten und zu einer Matrizenbohrung ausgerichtet werden kann, wobei der Rotor (10) am Umfang einen Auflagerring (30) bzw. Auflagerflächen aufweist, auf den bzw. die etwa zu den Matrizenbohrungen ausgerichtet die Preßlinge (34) aufgelegt werden können, die radialen Arme (40) im Rotor (10) angeordnet sind, mit diesem umlaufen und radial bewegliche, radial zueinander bewegliche Greifabschnitte (46,48) aufweisen und im Rotor (10) eine stationäre Führung vorgesehen ist mit erster und zweiter Führungskurve (66,68), mit denen Kurvenfolger (56,58) der Greifabschnitte (46,48) zusammenwirken, um einen Preßling (34) auf dem Aufnahmering (30) bzw. eine Auflagefläche zu erfassen, in Ausrichtung zur Matrizenbohrung (12) zu bringen und wieder freizugeben.

## Beschreibung

Die Erfindung bezieht sich auf eine Rundläufer-Tablettenpresse für die Herstellung von mehrschichtigen Tabletten nach dem Oberbegriff des Patentanspruchs 1.

Rundläuferpressen zur Herstellung von Preßlingen in Tablettenform sind in den vielfältigsten Ausführungsformen bekannt. Die typische Rundläuferpresse enthält einen drehend angetriebenen Rotor mit einer Matrizenscheibe und unterer und oberer Stempelführung für die Ober- und Unterstempel, welche mit Matrizenbohrungen der Matrizenscheibe zusammenwirken. Die Stempel werden von stationären Steuerkurven betätigt. Der eigentliche Preßvorgang erfolgt mit Hilfe von oberen und unteren Druckrollen, mit welchen die Stempel gegeneinander bewegt werden, zwecks Pressens der Tablette aus einem pulverförmigen Material, das zuvor in den Matrizenbohrungen eingeführt wurde.

Es ist auch bekannt, mit derartigen Pressen Mehrschichttabletten zu fertigen. Bestehen diese aus zwei oder mehr Schichten, ist es ohne weiteres möglich, Schicht auf Schicht eine Pressung vorzunehmen mit Hilfe entsprechender Befüllvorrichtungen und Druckstationen. In machen Fällen werden jedoch Tabletten geformt, die mit einem bereits vorher gepreßten Abschnitt verbunden werden, einem sogenannten Kern. Der Kern kann entweder in eine ein- oder mehrschichtige Tablette einseitig eingepreßt werden oder auch ummantelt sein. Für diesen Fall ist erforderlich, daß der vorgepreßte Kern von außen zugeführt und zur Matrizenbohrung ausgerichtet wird, damit er mit dem bereits vorgepreßten Material in der Matrizenbohrung verpreßt werden kann. Aus EP 0 349 777 A1 ist eine Vorrichtung bekannt geworden, mit der vorgepreßte Kerne eingelegt werden. Die bekannte Vorrichtung weist eine drehend angetriebene Scheibe neben dem Rotor auf. In der Scheibe sind Arme radial beweglich gelagert, die mit Hilfe von Vakuumvorrichtungen jeweils einen Kern halten können. Die Arme werden radial bewegt, während die Scheibe sich in Übereinstimmung mit dem Rotor dreht, derart, daß die Arme jeweils mit einer Matrizenbohrung zur Deckung gebracht werden. Der Aufwand für eine derartige Vorrichtung sowie auch der Platzbedarf ist relativ groß.

Der Erfindung liegt die Aufgabe zugrunde, eine Rundläufer-Tablettenpresse zu schaffen, bei der die Einlegeeinrichtung für die vorgeformten Preßlinge in die Rundläuferpresse integriert werden kann.

Diese Aufgabe wird durch die Merkmale des Patentanspruchs 1 gelöst.

Bei der erfindungsgemäßen Vorrichtung weist der Rotor am Umfang eine ringförmige Auflagerfläche auf, auf die in etwa zu den Matrizenbohrungen ausgerichtet die Preßlinge aufgelegt werden. Die Preßlinge können mit Hilfe einer geeigneten Zuführvorrichtung vereinzelt und taktweise so zugeführt werden, daß sie jeweils zu den Matrizenbohrungen ausgerichtet auf der Auflagerfläche aufliegen. Letztere kann mit einer geeigneten Ausnehmung versehen werden, in welcher die Preßlinge gehalten und gehindert werden, durch die Zentrifugalkraft abzurutschen oder abzurollen. Bei der erfindungsgemäßen Vorrichtung sind ebenfalls radiale Arme vorgesehen, die jedoch mit dem Rotor umlaufen. Die Arme haben zwei radial bewegliche und relativ zueinander bewegbare Greifabschnitte. Die Greifabschnitte können radial zu gegenüberliegenden Seiten eines auf dem Auflagersegment liegenden Preßlings gebracht und anschließend zusammengefahren werden, um den Preßling zu erfassen. Anschließend können beide Greifabschnitte radial so weit bewegt werden, bis der Preßling sich oberhalb der Matrizenbohrung befindet. Mit Hilfe des Oberstempels kann dann der Preßling in dieser Position gehalten werden, während die Greifabschnitte wieder auseinanderfahren. Anschließend kann mit Hilfe des Oberstempels der Preßling in das Material, das sich bereits in der Matrizenbohrung befindet, eingepreßt werden. Im Rotor ist eine stationäre Führung vorgesehen, die eine erste und eine zweite Führungskurve aufweist, mit denen Kurvenfolger der Greifabschnitte zusammenwirken, um einen Preßling auf dem Auflagersegment zu erfassen, in Ausrichtung zur Matrizenbohrung zu bringen und wieder freizugeben.

Bei der erfindungsgemäßen Rundläuferpresse ist die Einlegevorrichtung für die Preßlinge bzw. die Kerne in den Rotor der Presse integriert. Die Arme und die Führung für die Arme sind Bestandteile des Rotors bzw. innerhalb des Rotors gelagert. Die Baugröße herkömmlicher Rundläuferpressen braucht daher nicht überschritten zu werden.

Es sind verschiedene Möglichkeiten denkbar, den Preßling auf dem Auflagersegment mit Hilfe der Greifabschnitte zu erfassen und anschließend zur Matrizenbohrung zu transportieren. Eine besonders einfache Vorkehrung besteht erfindungsgemäß darin, daß dem Auflagersegment Anhebemittel zugeordnet sind, welche die abgelegten Preßlinge anheben, wenn sie sich zwischen den Greifabschnitten befinden. Die Anhebemittel können nach einer weiteren Ausgestaltung der Erfindung Anhebestifte aufweisen, die von einer stationären Steuerkurve betätigt werden.

Nach einer anderen Ausgestaltung der Erfindung weist die stationäre Führung eine stationäre Scheibe im Rotor oberhalb der Matrizenscheibe auf, die Führungsnuten für die Kurvenfolger aufweist.

Die Greifabschnitte und ihre Lagerung können wiederum durch verschiedenartige Konstruktionen verwirklicht werden. Eine besteht erfindungsgemäß darin, daß die Greifabschnitte und die Kurvenfolger jeweils an Rohrstücken angebracht sind, die teleskopisch mit radialen in radialer Richtung rotorfesten Stangen zusammenwirken.

Es kann nach einer weiteren Ausgestaltung der Erfindung zweckmäßig sein, wenn die Arme am radial inneren Ende um eine horizontale Achse schwenkbar gelagert sind und eine weitere stationäre Führung vorgesehen ist, welche die Arme über einen vorgegebenen Drehwinkel des Rotors anhebt. Die Befüllvorrichtung ist bekanntlich stationär. Sie ist unter Umständen den mitlaufenden Armen im Wege. Um dieses Hindernis zu überwinden, können die Arme im Bereich der Befüllvorrichtung hochgeschwenkt werden.

Die Erfindung wird nachfolgend anhand von in den Zeichnungen dargestellten Ausführungsformen näher erläutert.
- Fig. 1: zeigt schematisch die Draufsicht auf den Rotor einer erfindungsgemäßen Rundläuferpresse.
- Fig. 2: zeigt einen Teil des Rotors nach Fig. 1 in Seitenansicht mit einem Arm und einem Oberstempel.
- Fig. 3: zeigt perspektivisch den Arm nach Fig. 2.
- Fig. 4: zeigt eine ähnliche Darstellung wie Fig. 2 mit abgesenktem Oberstempel zur Fixierung des Preßlings.

- Fig. 5: zeigt eine ähnliche Darstellung wie Fig. 2 und 4 während des Einpressens des Preßlings.
- Fig. 6: zeigt die Beendigung des Einbringvorgangs des Preßlings.
- Fig. 7: zeigt eine ähnliche Darstellung wie die vorausgehenden Figuren, jedoch mit hochgeschwenktem radialem Arm.

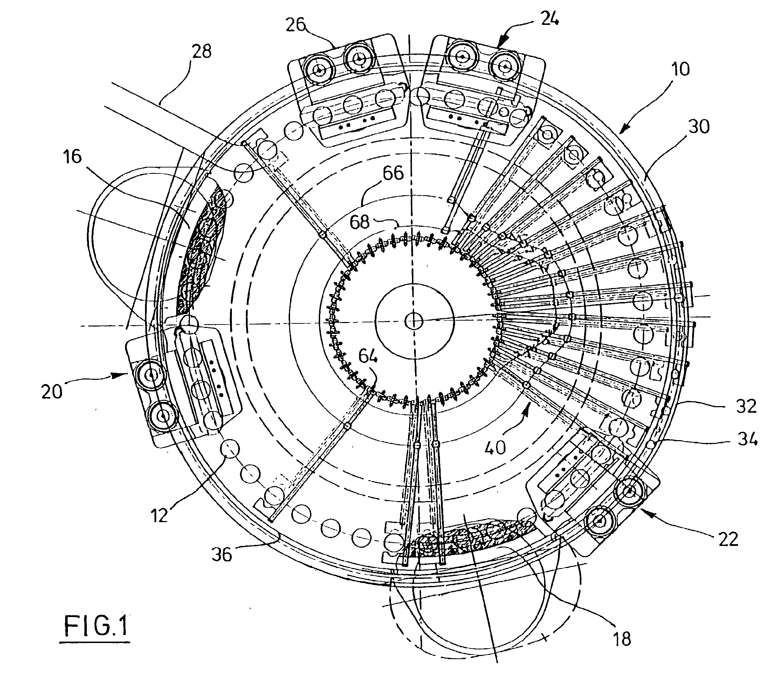

In Fig. 1 ist bei 10 der Rotor einer Rundläuferpresse dargestellt, wobei jedoch die Oberstempel und die zugehörige Stempelführung weggelassen sind. Man erkennt die Matrizenbohrungen 12 auf einem Teilkreis der Matrizenscheibe des Rotors 10. Dem Rotor 10 sind eine erste Befüllvorrichtung 16 und eine zweite Befüllvorrichtung 18 zugeordnet. Sie sind stationär und dienen dazu, pulverförmiges Material in die Matrizenbohrungen 12 einzufüllen, wobei die nicht gezeigten Unterstempel die Matrizenbohrungen nach unten verschließen. Im Anschluß an die Befüllvorrichtung 16 ist eine Druckstation 20 zu erkennen, welche die Ober- und Unterstempel mit Hilfe von Druckrollen zusammenführt, um das eingefüllte Material zu verpressen. Im Anschluß an die Befüllvorrichtung 18 ist eine weitere Druckstation 22 vorgesehen. Zwei weitere Preßstationen 24 und 26 befinden sich im größeren Umfangsabstand am Rotor 10. Bei dem Preßvorgang dreht sich der Rotor entgegengesetzt dem Uhrzeigersinn. Mit den bisher beschriebenen an sich bekannten Maßnahmen läßt sich mithin eine Zweischichttablette pressen, welche bei 28 entfernt wird.

Man erkennt in der Darstellung nach Fig. 1 einen Auflagerring 30, der durch ein stationäres Ringsegment 32, das sich von der annähernd 6-Uhr-Position bis zur annähernd 2-Uhr-Position erstreckt, außen begrenzt ist. In diesem Bereich ist mithin ein Ringabschnittskanal gebildet, in den runde Preßlinge 34 oder Kerne eingelegt werden können. Zur Sicherung der Kerne 34 in ihre Lage kann an der Innenseite des Auflagerrings 30 ein Begrenzungsring 36 vorgesehen werden, der mit kleinen Ausnehmungen versehen ist, durch welche die Preßlinge 34 in Umfangsrichtung festgelegt sind. Die Ablage der Preßlinge 34 erfolgt in annähernd radialer Ausrichtung zu den Matrizenbohrungen.

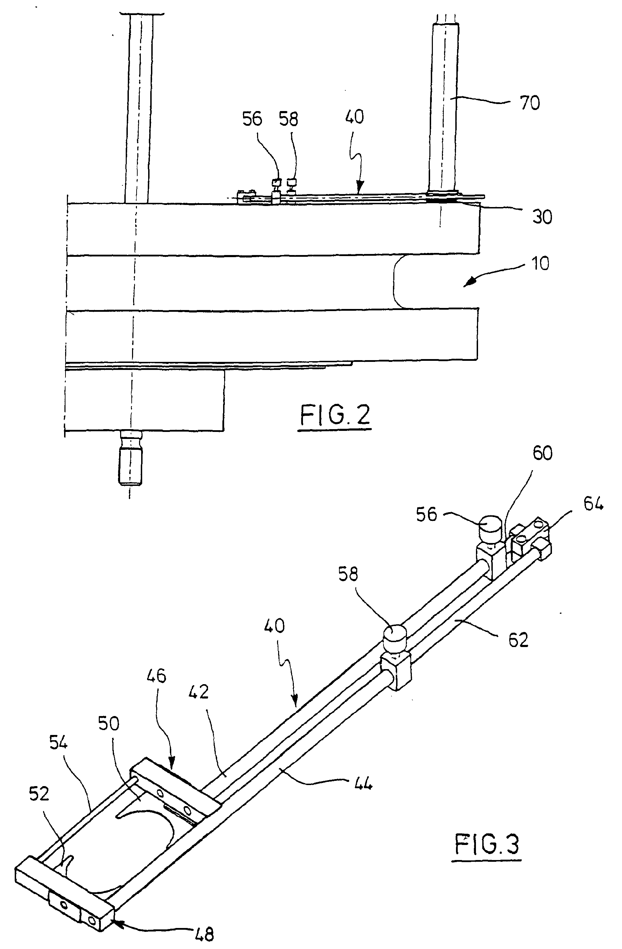

Jeder Matrizenbohrung 12 ist ein radialer Arm 40 zugeordnet, dessen Aufbau näher in Fig. 3 zu erkennen ist. Jeder Arm 40 weist zwei parallele Rohrstücke 42, 44 auf, die an den Enden Greifabschnitte 46, 48 halten. Die Greifabschnitte 46, 48 weisen Greifansätze 50, 52 auf, die ausgetauscht werden können, um eine Anpassung an die Außenkontur des Preßlings 34 vornehmen zu können. Am Greifabschnitt 48 ist eine Führungsstange 54 angebracht, die mit einer Führungsbohrung des Greifabschnitts 46 zusammenwirkt. An den Enden der Rohrstücke 42, 44 sind Kurvenfolger 56, 58 angebracht. Die Rohrstücke 42, 44 wirken teleskopisch mit Stangen 60, 62 zusammen, die an einem Block 64 um eine horizontale Achse schwenkbar angelenkt sind. Die Blöcke 64 sind fest auf dem Rotor 10 angebracht, wie in Fig. 1 zu erkennen. Oberhalb der Matrizenscheibe mit den Matrizenbohrungen 12 ist eine Scheibe (nicht gezeigt) stationär angeordnet. Sie wird von oben durch den Innenraum des Rotors gehalten, der fliegend gelagert ist. Eine fliegende Lagerung von Rotoren von Rundläuferpressen ist an sich bekannt. Die stationäre Scheibe weist zwei Ringnuten auf, die in Fig. 1 bei 66 und 68 angedeutet ist. Mit den Ringnuten 66, 68 wirken die Kurvenfolger 56, 58 zusammen.

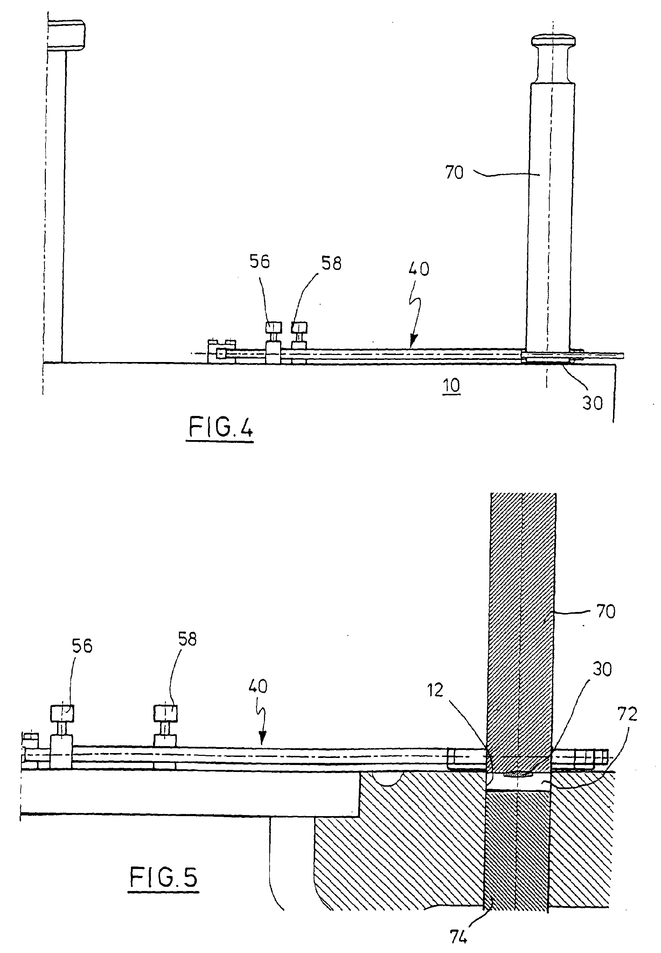

Man erkennt ferner aus Fig. 1, daß von der Preßstation 24 bis zur Preßstation 22 entgegengesetzt der Uhrzeigerrichtung gesehen die Greifabschnitte 46, 48 sich radial auf gegenüberliegende Seiten der Matrizenbohrungen in geöffneter Position befinden. Nachdem hinter der Preßstation 22 die Preßlinge 34 eingelegt werden, beginnt aufgrund des geänderten Verlaufs der Nuten 66, 68 eine Verstellung der Greifabschnitte 46, 48 radial nach außen, bis sie auf gegenüberliegenden Seiten des Preßlings liegen. Dies ist in Fig. 1 kurz hinter der 3-Uhr-Stellung der Fall. Eine nicht gezeigte Anhebevorrichtung in Form von Stiften unterhalb der Positionen der Preßlinge 34, die mit einer stationären Steuerkurve zusammenwirken, hebt den Preßling 34 etwas an zwischen die Ansätze 50, 52 der Greifabschnitte 46, 48. Gleichzeitig werden die Greifabschnitte aufeinander zugefahren, um den Preßling zu erfassen. Ist dies geschehen, wie in der 2-Uhr-Stellung in Fig. 1 zu erkennen, erfolgt anschließend das gemeinsame radiale Einwärtsfahren der Greifabschnitte 46, 48, bis der Kern mit der Matrizenbohrung ausgerichtet ist. Dies ist in der 1-Uhr-Stellung nach Fig. 1 zu erkennen. Gleichzeitig wird der Oberstempel, der der Matrizenbohrung zugekehrt ist, abgesenkt. Dies ist in Fig. 2 zu erkennen. Der Oberstempel ist mit 70 bezeichnet. In Fig. 4 ist zu erkennen, daß der Oberstempel 70 weiter abgesenkt ist und nunmehr den Preßling 30 festhält. Die Greifabschnitte 46, 48 können nun mit Hilfe der Steuernuten 66, 68 auseinander gefahren werden, und der Oberstempel 70 preßt den Preßling 30 in den gepreßten Tablettenabschnitt 72 in der Matrizenbohrung 12 gegen den Unterstempel 74. Dieser Vorgang erfolgt in den Preßstationen 24, 26. Anschließend kann mit Hilfe der zweiten Befüllvorrichtung 16 weiteres pulverförmiges Material eingefüllt werden, so daß eine zweite Schicht oberhalb des Preßlings 30 gebildet ist.

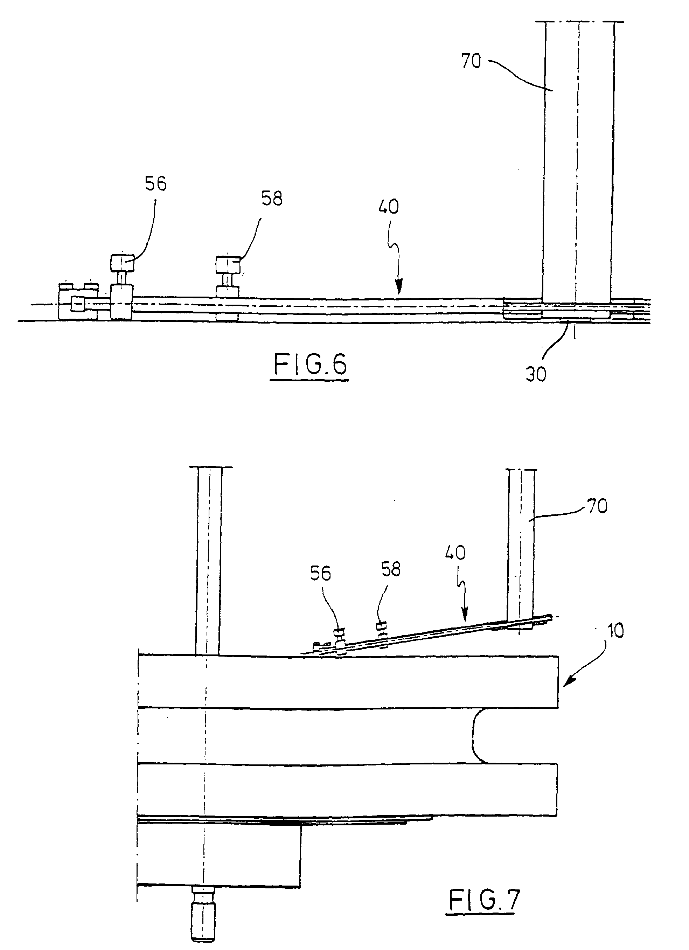

In Fig. 7 ist zu erkennen, daß die Arme 40 auch nach oben geschwenkt werden können, um etwa den Befüllvorrichtungen oder Befüllschuhen 16, 18 auszuweichen. Die Greifabschnitte sind auseinander gefahren, wie auch in Fig. 1 zu erkennen, so daß der Oberstempel 70 durch den Abstand zwischen den Greifabschnitten 46, 48 geführt sein kann.

## Patentansprüche

1. Rundläufer-Tablettenpresse für die Herstellung von mehrschichtigen Tabletten, mit einem drehangetriebenen Rotor, der eine Matrizenscheibe mit Matrizenbohrungen und zu den Matrizenbohrungen ausgerichteten Ober- und Unterstempel aufweist, die in Stempelführungen des Rotors geführt und von stationären Steuerkurven axial betätigt werden, einer Einlegevorrichtung für einen Abschnitt der tablettenbildenden Preßlinge, die zwei oder mehr radial beweglich geführte Arme aufweist, an deren Enden jeweils ein Preßling gehalten und zu einer Matrizenbohrung ausgerichtet werden kann, **dadurch gekennzeichnet, daß** der Rotor (10) am Umfang einen Auflagerring (30) bzw. Auflagerflächen aufweist, auf den bzw. die etwa zu den Matrizenbohrungen (12) ausgerichtet die Preßlinge (34) aufgelegt werden können, die radialen Arme (40) im Rotor (10) angeordnet sind, mit diesem umlaufen und radial bewegliche, radial zueinander bewegliche Greifabschnitte (46, 48) aufweisen und im Rotor (10) eine stationäre Führung vorgesehen ist mit erster und zweiter Führungskurve (66, 68), mit denen Kurvenfolger (56, 58) der Greifabschnitte (46, 48) zusammenwirken, um einen Preßling (34) auf dem Aufnahmering (30) bzw. eine Auflagefläche zu erfassen, in Ausrichtung zur Matrizenbohrung (12) zu bringen und wieder freizugeben.

2. Tablettenpresse nach Anspruch 1, **dadurch gekennzeichnet, daß** dem Auflagerring (30) Anhebemittel zugeordnet sind, welche die abgelegten Preßlinge (34) anheben, wenn sie sich zwischen den Greifabschnitten (46, 48) eines Arms (40) befinden.

3. Tablettenpresse nach Anspruch 2, **dadurch gekennzeichnet, daß** Anhebestifte vorgesehen sind, die von einer stationären Steuerkurve betätigt werden.

4. Tablettenpresse nach einem der Ansprüche 1 bis 3, **dadurch gekennzeichnet, daß** die stationäre Führung eine stationäre Scheibe im Rotor (10) oberhalb der Matrizenscheibe aufweist, mit Führungsnuten (66, 68) für die Kurvenfolger (56, 58).

5. Tablettenpresse nach einem der Ansprüche 1 bis 4, **dadurch gekennzeichnet, daß** die Greifabschnitte (46, 48) und die Kurvenfolger (56, 58) jeweils an Rohrstücken (42, 44) angebracht sind, die teleskopisch mit radialen, in radialer Richtung rotorfesten Stangen (60, 62) zusammenwirken.

6. Tablettenpresse nach einem der Ansprüche 1 bis 5, **dadurch gekennzeichnet, daß** die Arme (40) am radial inneren Ende um eine horizontale Achse schwenkbar gelagert sind und eine weitere stationäre Führung vorgesehen ist, welche die Arme (40) über einen vorgegebenen Drehwinkel des Rotors (10) anhebt.
